# EUROPÄISCHE PATENTSCHRIFT

(11) **EP 3 103 373 B1**
(45) Veröffentlichungstag und Bekanntmachung des Hinweises auf die Patenterteilung: **23.08.2017**
(21) Anmeldenummer: 16169835.2
(22) Anmeldetag: 17.05.2016
(51) Int. Cl.: A47J 37/07

(54) **KOHLEGRILL MIT HÖHENVERSTELLBAREM KOHLEROST**
CHARCOAL GRILL WITH HEIGHT ADJUSTABLE COAL GRATE
GRIL COMPRENANT UNE GRILLE A CHARBON DE BOIS REGLABLE EN HAUTEUR

(30) Priorität: 09.06.2015 DE 102015109093
(43) Veröffentlichungstag der Anmeldung: 14.12.2016
(73) Patentinhaber: TEPRO Garten GmbH, 63322 Rödermark (DE)
(72) Erfinder: Zhang, Xin Chun, Bailongtang Town Shaanxi (CN)
(74) Vertreter: Feucker, Max Martin

(56) Entgegenhaltungen:
- CN-A- 102 067 893
- CN-U- 204 274 196

## Beschreibung

Die vorliegende Erfindung betrifft einen Kohlegrill mit einem in einem Grillgehäuse angeordneten Kohlerost und einer Hebevorrichtung für den Kohlerost, die an einer ersten Seite des Kohlerosts eine schwenkbar an dem Kohlerost und schwenkbar zu einer in dem Grillgehäuse ausgebildeten ersten Halterung gelagerte erste Betätigungsstrebe und eine parallel zu der ersten Betätigungsstrebe ausgerichtete, schwenkbar an dem Kohlerost und schwenkbar an der ersten Halterung gelagerte erste Führungsstrebe sowie an einer zweiten Seite des Kohlerosts eine schwenkbar an dem Kohlerost und schwenkbar zu einer in dem Grillgehäuse ausgebildeten zweiten Halterung gelagerte zweite Betätigungsstrebe und eine parallel zu der zweiten Betätigungsstrebe ausgerichtete, schwenkbar an dem Kohlerost und schwenkbar an der zweiten Halterung gelagerte zweite Führungsstrebe aufweist, wobei die erste Betätigungsstrebe und die zweite Betätigungsstrebe an ihren den Halterungen zugewandten Enden drehfest über eine Betätigungswelle miteinander verbunden sind, so dass der Kohlerost durch Drehen der Betätigungswelle gehoben oder gesenkt wird.

Ein Kohlegrill mit den vorgenannten Merkmalen ist aus CN 102067893 A bekannt, bei welchem an der Betätigungswelle der Hebevorrichtung ein Betätigungselement drehfest befestigt ist, so dass die Betätigungswelle mittels des Betätigungselements um ihre Drehachse gedreht werden kann. Das Betätigungselement wird durch eine an dem Grillgehäuse gelagerte Kurbel betätigt, wobei das Ende der Kurbel die Auslenkung des Betätigungselements und damit die Drehstellung der in der Halterungen drehbar gelagerten Betätigungswelle vorgibt. Da die Betätigungsstreben starr mit der Betätigungswelle verbunden sind korrespondiert die Drehstellung der Betätigungswelle mit der Schwenkstellung der Betätigungsstreben, wodurch die Höhe des Kohlerosts in dem Grillgehäuse vorgegeben ist. Ist die Kurbel beispielsweise vollständig in das an dem Grillgehäuse befestigte Gewinde hereingedreht, nimmt der Kohlerost die höchste Stellung ein. Wird die Kurbel aus dem Gewinde herausgedreht, wird der Kohlerost abgesenkt. Da die Streben und die Betätigungswelle der Hebevorrichtung fest mit den an dem Grillgehäuse befestigten Halterungen verbunden sind, kann das Kohlerost und die Hebevorrichtung nur mit großem Aufwand zur Reinigung aus dem Kohlegrill entfernt werden. Aufgabe der vorliegenden Erfindung ist es daher, das mit Bezug zum Stand der Technik geschilderte Problem zu lösen und insbesondere einen Kohlegrill anzugeben, bei dem ein mit einer Hebevorrichtung in seiner Höhe verstellbarer Kohlerost einfach aus dem Kohlegrill herausnehmbar und wieder einsetzbar ist.

Gelöst wird diese Aufgabe durch einen Kohlegrill mit den Merkmalen des unabhängigen Anspruchs. Vorteilhafte Weiterbildungen des Kohlegrills sind in den abhängigen Ansprüchen angegeben. Gelöst wird die Aufgabe insbesondere durch einen Kohlegrill mit den eingangs genannten Merkmalen, wobei die Führungsstreben und die Halterungen derart ausgebildet sind, dass zur Anbringung des Kohlerosts die Betätigungswelle zunächst in die erste Halterung eingebracht, insbesondere eingehängt wird und anschließend durch ein axiales Verschieben in Richtung der Längserstreckung der Betätigungswelle mit einem Ende in die zweite Halterung eingesteckt wird, wobei gleichzeitig die erste Führungsstrebe in die erste Halterung und die zweite Führungsstrebe in die zweite Halterung eingesteckt werden.

Es ist also vorgesehen, dass die die Streben und die Betätigungswelle umfassende Hebevorrichtung einfach lösbar mit den an dem Grillgehäuse angebrachten Halterungen verbunden ist. Hierzu weist die erste Halterung insbesondere eine zu ihrem oberen Rand hin durchgehende Aufnahme auf, in die zunächst die Betätigungswelle beim Einsetzen des Kohlerosts und der Hebevorrichtung in das Grillgehäuse eingebracht wird. Anschließend wird die Hebevorrichtung mit den Streben und der Betätigungswelle sowie der Kohlerost seitlich in einer horizontalen Richtung bewegt, wobei ein Ende der Betätigungswelle und gleichzeitig die zweite Führungsstrebe in die zweite Halterung, insbesondere in Löcher in der zweiten Halterung, eingesteckt werden. Die erste Führungsstrebe wird zudem bei der horizontalen Bewegung in ein entsprechendes Loch in der ersten Halterung eingesteckt. Zum Herausnehmen der Hebevorrichtung und des Kohlerosts müssen diese zunächst seitlich versetzt werden, wodurch das Ende der Betätigungswelle und die Führungsstreben aus den Löchern in den Halterungen herausgelangen. Danach muss die Hebevorrichtung mit dem Kohlerost lediglich noch angehoben werden, wobei die Betätigungswelle aus der Aufnahme der ersten Halterung herausgelangt.

Im montierten Zustand sind die Betätigungsstreben insbesondere mittels der Betätigungswelle an den Halterungen schwenkbar gelagert, während die Führungsstreben insbesondere unmittelbar in den Halterungen schwenkbar gelagert sind. An der Betätigungswelle ist insbesondere ein radial von der Betätigungswelle abstehendes Betätigungselement ausgebildet, welches von einer in einem an dem Grillgehäuse angebrachten Gewinde geführten Spindel um die Achse der Betätigungswelle auslenkbar ist. Die Auslenkung des Betätigungselements gibt somit die Drehstellung der Betätigungswelle vor. Die Drehung der Betätigungswelle um ihre Wellenachse sorgt wiederum dafür, dass die starr mit der Betätigungswelle verbundenen Betätigungsstreben verschwenkt werden, wodurch die Höhe des an den schwenkbaren Enden der Betätigungsstreben angebrachten Grillrosts in dem Grillgehäuse verändert wird, wobei die parallel zu der jeweiligen Betätigungsstrebe ausgerichteten Führungsstreben dafür sorgen, dass der Grillrost jederzeit waagerecht ausgerichtet ist und nicht pendeln kann.

Es kann vorgesehen sein, dass die erste Führungsstrebe und die zweite Führungsstrebe jeweils mit einem abgewinkelten Ende in die Halterungen eingesteckt werden. Die Enden der Führungsstreben sind insbesondere in einem rechten Winkel zu ihrem sich an die Enden anschließenden Verlauf ausgerichtet und werden bei der seitlichen Bewegung während der Montage in die Halterungen eingesteckt.

Die Betätigungsstreben und die Führungsstreben können jeweils unmittelbar oder mittelbar über mindestens ein zusätzliches Element an dem Kohlerost schwenkbar gelagert sein. Beispielsweise können die Betätigungsstrebe und die Führungstrebe auf einer Seite des Kohlerosts in einer an dem Kohlerost angebrachten Platte schwenkbar gelagert sein.

In einer Ausführungsform des Kohlegrills kann vorgesehen sein, dass die erste Führungsstrebe und die zweite Führungsstrebe als Abschnitte eines einteilig ausgebildeten Führungselements gebildet sind und sich ein drehbar gelagerter Verbindungsabschnitt des Führungselements unterhalb des Kohlerosts erstreckt. Das Führungselement besteht also aus den die erste Führungsstrebe und die zweite Führungsstrebe ausbildenden Abschnitten und einem die Führungsstreben verbindenden Verbindungsabschnitt, welcher unterhalb des Kohlerosts angeordnet ist. Somit sind die beiden Führungsstreben starr miteinander verbunden und gemeinsam schwenkbar an dem Kohlerost gelagert, so dass die Führungsstreben bei der Montage immer die gleiche Ausrichtung zueinander haben und somit zum Einstecken in die Halterungen gemeinsam ausrichtbar sind. Es muss beispielsweise nur die erste Führungsstrebe bei der Montage zu der Aussparung in der ersten Halterung ausgerichtet werden, so dass gleichzeitig die zweite Führungsstrebe zu der Aussparung in der zweiten Halterung ausgerichtet wird.

Es kann insbesondere vorgesehen sein, dass die Führungsstreben aus einem im Querschnitt kreisförmigen Stabmaterial geformt sind, so dass insbesondere die abgewinkelten Enden einfach an den Halterungen schwenkbar gelagert werden können.

In einer Ausführungsform kann vorgesehen sein, dass die Betätigungswelle nach außen über die zweite Betätigungsstrebe hinaussteht. Die Betätigungswelle wird insbesondere im Bereich der ersten Betätigungsstrebe in die erste Halterung eingehängt und wird sodann mit dem über die zweite Betätigungsstrebe hinausstehenden Bereich in die Aussparung in der zweiten Halterung eingesteckt.

Damit die erste Betätigungsstrebe und die zweite Betätigungsstrebe jeweils schon während der Montage parallel zu den Führungsstreben ausgerichtet sind, kann vorgesehen sein, dass zumindest die erste Betätigungsstrebe und die erste Führungsstrebe oder die zweite Betätigungsstrebe und die zweite Führungsstrebe über jeweils ein schwenkbar an den beiden Streben gelagertes Verbindungselement miteinander verbunden sind.

Die Erfindung sowie das technische Umfeld werden im Folgenden anhand der Figuren erläutert, wobei darauf hinzuweisen ist, dass die Figuren eine bevorzugte Ausführungsform der Erfindung zeigt. Es zeigen schematisch
- Fig. 1:: einen Kohlegrill,
- Fig. 2:: einen Kohlegrill mit geöffnetem Deckel,
- Fig. 3:: einen Kohlerost mit einer Hebevorrichtung,
- Fig. 4:: den mit der Hebevorrichtung an einem Grillgehäuse gelagerten Kohlerost und
- Fig. 5:: die Montageschritte des Kohlerosts.

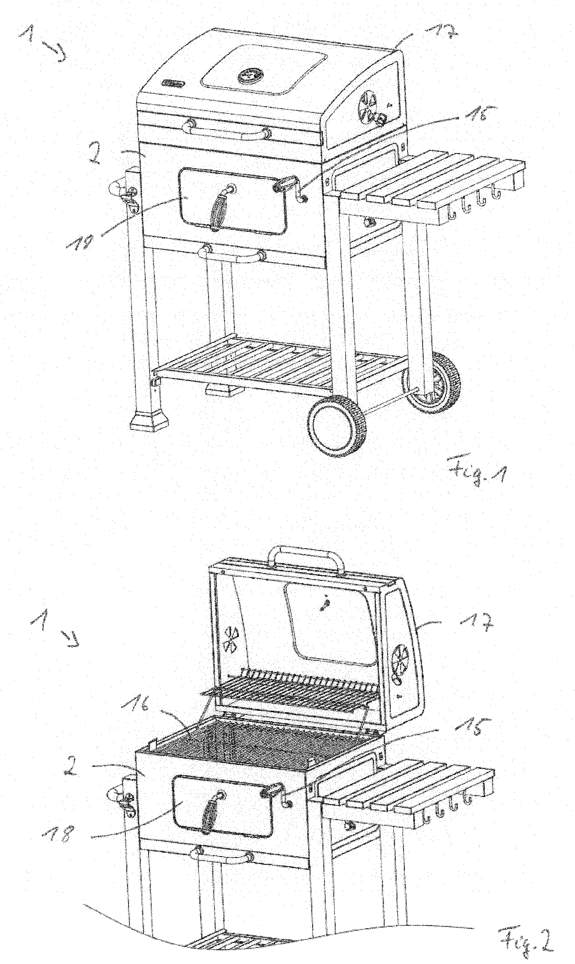

Fig. 1 zeigt einen Kohlegrill 1 mit einem Grillgehäuse 2 und einem Deckel 17. In dem Grillgehäuse 2 ist eine Klappe 18 ausgebildet, durch die Kohle in das Grillgehäuse 2 auf einen in Fig. 1 nicht sichtbaren Kohlerost 3 aufgelegt werden kann. Die Höhe des Kohlerosts 3 innerhalb des Grillgehäuses 2 kann mittels einer Kurbel 15 verstellt werden.

In Fig. 2 ist der Kohlegrill 1 mit geöffnetem Deckel 17 dargestellt, wobei ein ortsfest in das Grillgehäuse 2 einlegbarer Grillrost 16 zu erkennen ist. Um die Hitze, die auf das auf den Grillrost 16 aufgelegte Grillgut wirkt, zu beeinflussen, kann die Höhe des unterhalb des Grillrosts 16 angeordneten Kohlerosts 3 in dem Grillgehäuse 2 mittels der Kurbel 15 verstellt werden.

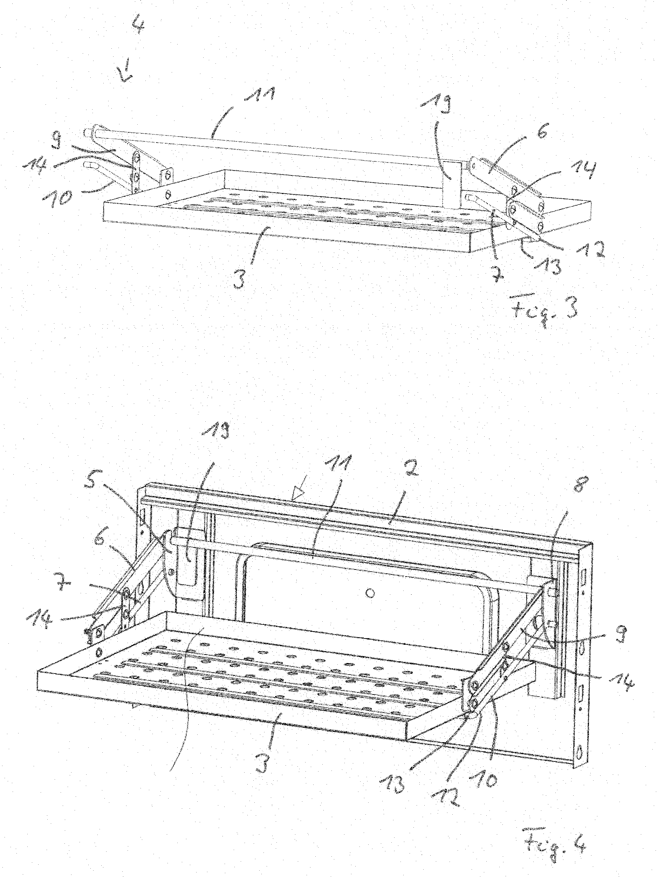

In Fig. 3 ist der gemeinsam mit einer Hebevorrichtung 4 aus dem Grillgehäuse 2 herausnehmbare Kohlerost 3 dargestellt. Die Hebevorrichtung 4 umfasst ein Führungselement 12, das auf der hier rechts dargestellten Seite des Kohlerosts 3 eine erste Führungsstrebe 7 und auf der linken Seite eine zweite Führungsstrebe 10 ausbildet. Die Führungsstreben 7, 10 des Führungselementes 12 sind über einen sich unterhalb des Kohlerosts 3 erstreckenden Verbindungsabschnitt 13 miteinander verbunden. Das Führungselement 12 ist an dem Kohlerost 3 drehbar gelagert, so dass die erste Führungsstrebe 7 und die zweite Führungsstrebe 10 gemeinsam schwenkbar an dem Kohlerost 3 gelagert sind.

Die Hebevorrichtung 4 umfasst ferner eine erste Betätigungsstrebe 6 auf der rechten Seite (gemäß Figur 3) und eine zweite Betätigungsstrebe 9 auf der linken Seite des Kohlerosts 3, die jeweils an dem Kohlerost 3 schwenkbar gelagert sind. Die erste Betätigungsstrebe 6 ist mit der ersten Führungsstrebe 7 mittels eines an ihnen schwenkbar gelagerten Verbindungselements 14 verbunden, so dass die erste Betätigungsstrebe 6 und die erste Führungsstrebe 7 jederzeit parallel zueinander ausgerichtet sind. Die zweite Betätigungsstrebe 9 ist ebenfalls mittels eines Verbindungselements 14 mit der zweiten Führungsstrebe 10 verbunden. Darüber hinaus sind die Enden der ersten Betätigungsstrebe 6 und der zweiten Betätigungsstrebe 9 drehfest mit einer Betätigungswelle 11 verbunden. Die Betätigungswelle 11 steht außen über die zweite Betätigungsstrebe 9 hervor und weist im Bereich zwischen den Betätigungsstreben 6, 9 ein drehfest mit der Betätigungswelle 11 verbundenes Betätigungselement 19 auf.

In Fig. 4 ist die Hebevorrichtung 4 und der Kohlerost 3 gemäß Fig. 3 in einem an dem Grillgehäuse 2 montierten Zustand gezeigt. An dem Grillgehäuse 2 sind eine erste Halterung 5 und eine zweite Halterung 8 angebracht. Die Betätigungswelle 11 ist auf einer der ersten Betätigungsstrebe 6 zugeordneten Seite des Kohlerosts 3 in die erste Halterung 5 eingehängt und mit dem über die zweite Betätigungsstrebe 9 hinausstehenden Ende in die zweite Halterung 8 eingesteckt. Die erste Führungsstrebe 7 ist in die erste Halterung 5 eingesteckt, während die zweite Führungsstrebe 10 mit ihrem abgewinkelten Ende in die zweite Halterung 8 eingesteckt ist. Die Betätigungsstreben 6, 9 sind also mittels der Betätigungswelle 11 schwenkbar an den Halterungen 5, 8 gelagert, während die Führungsstreben 7, 10 unmittelbar an den Halterungen 5, 8 schwenkbar gelagert sind. Wird nun das Betätigungselement 19 durch Hineindrehen der Kurbel 5 in ein an dem Grillgehäuse 2 angebrachtes Gewinde von dem Grillgehäuse 2 weggeschwenkt, so wird die Betätigungswelle 11 um ihre Lagerung in den Halterungen 5 und 8 gedreht. Da die Betätigungsstreben 6, 9 starr mit der Betätigungswelle 11 verbunden sind, werden die Betätigungsstreben 6, 9 mit ihren mit dem Kohlerost 3 verbundenen Enden nach oben verschwenkt, was in einer Anhebung des Kohlerosts 3 resultiert. Die Führungsstreben 7, 10 sorgen bei diesem Verschwenken dafür, dass der Kohlerost 3 jederzeit auch bei ungleichmäßig verteilter Beladung waagerecht ausgerichtet bleibt.

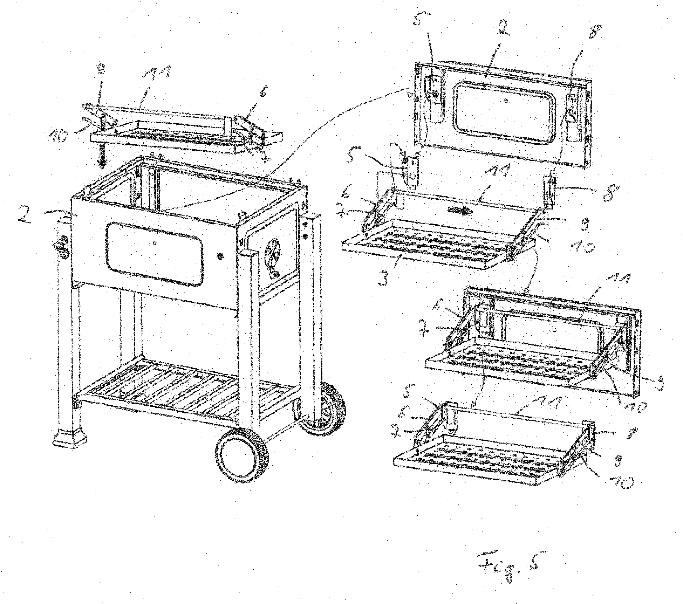

In Fig. 5 sind die einzelnen Montageschritte der Hebevorrichtung 4 und des Kohlerosts 3 angedeutet. Der Kohlerost 3 wird mit der Hebevorrichtung 4 zunächst von oben in das Grillgehäuse 2 eingesetzt, wobei die Betätigungswelle 11 zunächst an einer Seite in die erste Halterung 5 eingebracht wird. Anschließend wird die Hebevorrichtung 4 gemeinsam mit dem Kohlerost 3 seitlich bewegt, wodurch die abgewinkelten Enden der (ersten und zweiten) Führungsstreben 7, 10 in entsprechende Aussparungen in den Halterungen 5, 8 eingesteckt werden. Zudem wird bei dieser seitlichen Bewegung das über die zweite Betätigungsstrebe 9 hinausstehende Ende der Betätigungswelle 11 in eine entsprechende Aussparung in der zweiten Halterung 8 eingesteckt. Zum Herausnehmen des Kohlerosts 3 und der Hebevorrichtung 4 müssen diese zunächst seitlich versetzt werden und dann aus dem Grillgehäuse 2 herausgehoben werden. Der Kohlerost 3 kann somit zur Reinigung einfach ein- und ausgebaut werden.

### Bezugszeichenliste

- 1: Kohlegrill
- 2: Grillgehäuse
- 3: Kohlerost
- 4: Hebevorrichtung
- 5: erste Halterung
- 6: erste Betätigungsstrebe
- 7: erste Führungsstrebe
- 8: zweite Halterung
- 9: zweite Betätigungsstrebe
- 10: zweite Führungsstrebe
- 11: Betätigungswelle
- 12: Führungselement
- 13: Verbindungsabschnitt
- 14: Verbindungselement
- 15: Kurbel
- 16: Grillrost
- 17: Deckel
- 18: Klappe
- 19: Betätigungselement

## Patentansprüche

1. Kohlegrill (1) mit einem in einem Grillgehäuse (2) angeordneten Kohlerost (3) und einer Hebevorrichtung (4) für den Kohlerost (3), die an einer ersten Seite des Kohlerosts (3) eine schwenkbar an dem Kohlerost (3) und schwenkbar zu einer in dem Grillgehäuse (4) ausgebildeten ersten Halterung (5) gelagerte erste Betätigungsstrebe (6) und eine parallel zu der ersten Betätigungsstrebe (6) ausgerichtete, schwenkbar an dem Kohlerost (3) und schwenkbar an der ersten Halterung (5) gelagerte erste Führungsstrebe (7) sowie an einer zweiten Seite des Kohlerosts (3) eine schwenkbar an dem Kohlerost (3) und schwenkbar zu einer in dem Grillgehäuse (2) ausgebildeten zweiten Halterung (8) gelagerte zweite Betätigungsstrebe (9) und eine parallel zu der zweiten Betätigungstrebe (9) ausgerichtete, schwenkbar an dem Kohlerost und schwenkbar an der zweiten Halterung (8) gelagerte zweite Führungsstrebe (10) aufweist, wobei die erste Betätigungsstrebe (6) und die zweite Betätigungstrebe (9) an ihren den Halterungen (5, 8) zugewandten Enden drehfest über eine Betätigungswelle (11) miteinander verbunden sind, so dass der Kohlerost (3) durch Drehen der Betätigungswelle (11) gehoben oder gesenkt wird, **dadurch gekennzeichnet, dass** die Führungsstreben (7, 10) und die Halterungen (5, 8) derart ausgebildet sind, dass zur Anbringung des Kohlerosts (3) die Betätigungswelle (11) zunächst in die erste Halterung (5) eingebracht wird und anschließend durch axiales Verschieben mit einem Ende in die zweite Halterung (8) eingesteckt wird, wobei gleichzeitig die erste Führungsstrebe (7) in die erste Halterung (5) und die zweite Führungsstrebe (10) in die zweite Halterung (8) eingesteckt werden.

2. Kohlegrill (1) nach Anspruch 1, wobei die erste Führungsstrebe (7) und die zweite Führungsstrebe (10) jeweils mit einem abgewinkelten Ende in die Halterungen (5, 8) eingesteckt werden.

3. Kohlegrill (1) nach Anspruch 1 oder 2, wobei die erste Führungstrebe (7) und die zweite Führungsstrebe (10) als Abschnitte eines einteilig ausgebildeten Führungselements (12) gebildet sind und sich ein drehbar gelagerter Verbindungsabschnitt (13) des Führungselements (12) unterhalb des Kohlerosts (3) erstreckt.

4. Kohlegrill (1) nach einem der vorhergehenden Ansprüche, wobei die Führungsstreben (7, 10) aus einem im Querschnitt kreisförmigen Stabmaterial geformt sind.

5. Kohlegrill (1) nach einem der vorhergehenden Ansprüche, wobei die Betätigungswelle (11) nach außen über die zweite Betätigungsstrebe (9) hinaussteht.

6. Kohlegrill (1) nach einem der vorhergehenden Ansprüche, wobei zumindest die erste Betätigungsstrebe (6) und die erste Führungsstrebe (7) oder die zweite Betätigungsstrebe (9) und die zweite Führungsstrebe (10) über ein schwenkbar an den Streben gelagertes Verbindungselement (14) miteinander verbunden sind.

## Claims

1. Charcoal grill (1) comprising a charcoal rack (3) arranged in a grill housing (2) and a lifting device (4) for the charcoal rack (3) which on a first side of the charcoal rack (3) has a first actuating bar (6) pivotably mounted on the charcoal rack (3) and pivotably mounted relative to a first bracket (5) configured in the grill housing (4), and a first guide bar (7) oriented parallel to the first actuating bar (6) and pivotably mounted on the charcoal rack (3) and pivotably mounted on the first bracket (5) as well as on a second side of the charcoal rack (3) a second actuating bar (9) pivotably mounted on the charcoal rack (3) and pivotably mounted relative to a second bracket (8) configured in the grill housing (2) and a second guide bar (10) oriented parallel to the second actuating bar (9) and pivotably mounted on the charcoal rack (3) and pivotably mounted on the second bracket (8), wherein the first actuating bar (6) and the second actuating bar (9) are connected together fixedly in terms of rotation at their ends facing the brackets (5, 8) by an actuating shaft (11), so that the charcoal rack (3) is lifted or lowered by rotating the actuating shaft (11), **characterised in that** the guide bars (7, 10) and the brackets (5, 8) are configured such that for attaching the charcoal rack (3) the actuating shaft (11) is initially introduced into the first bracket (5) and subsequently by axial displacement is inserted with one end into the second bracket (8), wherein at the same time the first guide bar (7) is inserted into the first bracket (5) and the second guide bar (10) is inserted into the second bracket (8).

2. Charcoal grill (1) according to Claim 1, wherein the first guide bar (7) and the second guide bar (10) are inserted into the brackets (5, 8) in each case with an angled end.

3. Charcoal grill (1) according to Claim 1 or 2, wherein the first guide bar (7) and the second guide bar (10) are formed as portions of a guide element (12) configured in one piece and a rotatably mounted connecting portion (13) of the guide element (12) extends below the charcoal rack (3).

4. Charcoal grill (1) according to one of the preceding claims, wherein the guide bars (7, 10) are formed from a rod-shaped material which is circular in cross section.

5. Charcoal grill (1) according to one of the preceding claims, wherein the actuating shaft (11) protrudes outwardly over the second actuating bar (9).

6. Charcoal grill (1) according to one of the preceding claims, wherein at least the first actuating bar (6) and the first guide bar (7) or the second actuating bar (9) and the second guide bar (10) are connected together via a connecting element (14) pivotably mounted on the bars.

## Revendications

1. Gril à charbon (1) comportant une grille à charbon (3) disposée dans un boîtier de grill (2) et un dispositif de levage (4) pour la grille à charbon et qui présente, sur un premier côté de la grille à charbon (3), une première traverse d'actionnement s'appuyant de manière pivotable sur la grille à charbon (3) et pivotable par rapport à un premier support (5) constitué dans le boîtier de grill (4) et une première traverse de guidage (7) orientée parallèlement à la première traverse d'actionnement (6) et s'appuyant de manière pivotable sur la grille à charbon (3) et pivotable sur le premier support (5), ainsi que, sur un second côté de la grille à charbon (3), une seconde traverse d'actionnement (9) s'appuyant de manière pivotable sur la grille à charbon (3) et pivotable par rapport à un second support (8) constitué dans le boîtier de gril (2) et une seconde traverse de guidage (10) orientée parallèlement à la seconde traverse d'actionnement (9) et s'appuyant de manière pivotable sur la grille à charbon et pivotable sur le second support (8), la première traverse d'actionnement (6) et la seconde traverse d'actionnement (9) étant, par leurs extrémités tournées vers les supports (5, 8), reliées entre elles de manière fixe en rotation par un arbre d'actionnement (11), de sorte que la grille à charbon (3) est soulevée ou descendue par rotation de l'arbre d'actionnement, **caractérisé en ce que** les traverses de guidage (7, 10) et les supports (5, 8) sont réalisés de manière à ce que, pour installer la grille à charbon (3), l'arbre d'actionnement (11) soit d'abord introduit dans le premier support (5) puis fiché par décalage axial par une extrémité dans le second support (8), la première traverse de guidage (7) étant simultanément fichée dans le premier support (5) et la seconde traverse de guidage (10) dans le second support (8).

2. Gril à charbon (1) selon la revendication 1, dans lequel la première traverse de guidage (7) et la seconde traverse de guidage (10) sont fichées respectivement par une extrémité coudée dans les supports (5, 8).

3. Gril à charbon (1) selon la revendication 1 ou 2, dans lequel la première traverse de guidage (7) et la seconde traverse de guidage (10) sont constituées sous forme de sections d'un élément de guidage (12) monobloc et qu'une section de liaison (13) s'appuyant en rotation de l'élément de guidage (12) s'étend en-dessous de la grille à charbon (3).

4. Gril à charbon (1) selon une des revendications précédentes, dans lequel les traverses de guidage (7, 10) sont formées d'une barre de matériau de section transversale circulaire.

5. Gril à charbon (1) selon une des revendications précédentes, dans lequel l'arbre d'actionnement (11) déborde vers l'extérieur au-delà de la seconde traverse d'actionnement (9).

6. Gril à charbon (1) selon une des revendications précédentes, dans lequel au moins la première traverse d'actionnement (6) et la première traverse de guidage (7) ou la seconde traverse d'actionnement (9) et la seconde traverse de guidage (10) sont reliées entre elles par un élément de liaison (14) s'appuyant de manière pivotable sur les traverses
